# FASCICULE DE BREVET EUROPEEN

(11) **EP 1 131 515 B1**
(45) Date de publication et mention de la délivrance du brevet: **28.06.2006**
(21) Numéro de dépôt: 99971885.1
(22) Date de dépôt: 09.11.1999
(51) Int. Cl.: E04F 15/04, F16B 5/00

(54) **PANNEAU DE RECOUVREMENT POUR PARQUET, LAMBRIS OU ANALOGUE**
BODENBELAGSPLATTE, WANDPANEEL ODER ÄHNLICHES
FLOOR-COVERING PANEL, WAINSCOT PANEL OR THE LIKE

(30) Priorité: 09.11.1998 FR 9814074
(43) Date de publication de la demande: 12.09.2001
(73) Titulaire: ROYSOL, 89700 Tonnerre (FR)
(72) Inventeur: ROY, Valérie, F-89160 Ancy le Franc (FR); ROY, Alain, F-89600 Saint Florentin (FR)
(74) Mandataire: Rémont, Claude
(86) Numéro de dépôt international: PCT/FR1999/002750
(87) Numéro de publication internationale: WO 2000/028171

(56) Documents cités:
- EP-A- 0 999 321
- WO-A-96/27721
- DE-A- 4 002 547
- DE-A- 4 242 530
- DE-U- 29 710 175

## Description

La présente invention concerne un panneau de recouvrement pour parquet, lambris ou analogue.

Un panneau de ce genre est connu, notamment d'après le WO97/47834 qui décrit des panneaux composites à haute ou moyenne densité, à base de fibres, ayant des dimensions standardisées, et par exemple une épaisseur de l'ordre de 8 mm.

A partir de DE-U-297 10 175, on connaît en outre un panneau de recouvrement pour parquet, lambris ou analogue, comportant une face supérieure et une face inférieure et, sur au moins deux bords opposés, une nervure longitudinale sur un bord et, sur le bord opposé, une rainure longitudinale qui s'étend entre une lèvre supérieure et une lèvre inférieure, la nervure et la rainure étant ménagées dans l'épaisseur du panneau et ayant en section droite des conformations respectives complémentaires l'une de l'autre de telle sorte que la nervure d'un panneau est adaptée à être introduite dans la rainure d'un autre panneau adjacent identique, par rotation d'un panneau par rapport à l'autre de manière telle que les conformations de la nervure viennent en prise avec les conformations de la rainure pour s'opposer à un retrait d'un panneau par rapport à l'autre dans une direction perpendiculaire auxdits bords et parallèle auxdites faces de chaque panneau, la nervure comportant en section droite, à partir de son extrémité libre, et sur sa face inférieure, un premier tronçon sensiblement circulaire suivi par un premier relief en saillie vers le bas, et la lèvre inférieure comportant, sur sa face supérieure en partant du fond de la rainure, un premier tronçon sur lequel vient rouler et glisser le premier tronçon de la nervure, plus loin un premier évidement complémentaire dudit premier relief, et plus loin encore un bourrelet délimitant ledit premier évidement, la lèvre inférieure étant adaptée à fléchir élastiquement pour permettre le passage du premier relief par dessus le bourrelet et à reprendre ensuite sensiblement sa position au repos pour retenir la nervure dans la rainure.

Deux panneaux adjacents peuvent être encliquetés l'un par rapport l'autre, soit en rapprochant à force un panneau de l'autre panneau, soit en faisant tourner un panneau par rapport à l'autre. Dans les deux cas, la lèvre inférieure fléchit élastiquement d'une manière suffisante pour permettre l'introduction de la nervure dans la rainure et le passage du relief de la nervure par dessus le bourrelet à l'extrémité de la lèvre inférieure.

Dans la position assemblée, encliquetée, de deux panneaux adjacents, le tronçon reliant l'évidement au bourrelet presse élastiquement les panneaux l'un contre l'autre à la fois dans la direction perpendiculaire aux deux faces principales des panneaux, et perpendiculairement aux côtés respectifs des panneaux.

Toutefois, une sollicitation élastique s'exerçant à la fois dans deux directions perpendiculaires n'est pas satisfaisante dans la mesure où la composante de cette sollicitation dans chacune des deux directions visées est nécessairement une fraction relativement faible de la force de sollicitation.

En outre, l'assemblage ainsi réalisé à sec, en l'absence de toute colle, ne paraît pas présenter une étanchéité pleinement satisfaisante contre l'entrée des poussières et des liquides, en particulier de l'eau.

Le but de la présente invention est donc de proposer un panneau de recouvrement du type précité conformé de manière à créer entre deux panneaux adjacents des sollicitations prédéterminées dans les deux directions précitées tout en offrant une étanchéité accrue, contre les poussières et les liquides.

Suivant la présente invention, le panneau de recouvrement du type précité, compatible donc avec un encliquetage par rotation, est caractérisé en ce que
- en section droite, la nervure comporte sur sa face inférieure, et la lèvre inférieure de la rainure comporte sur sa face supérieure, respectivement un second relief en saillie vers le bas et un second évidement complémentaire conformés de manière telle que le second relief de la nervure d'un panneau vient en prise avec le second évidement de la rainure d'un panneau adjacent lorsque l'on fait tourner un panneau par rapport à l'autre afin de former un second moyen d'encliquetage de la nervure dans la rainure,
- et, lesdits premier et second évidements présentant chacun un tronçon constituant un côté extérieur de l'évidement, la face supérieure de la lèvre inférieure est conformée de manière telle que, au repos, le premier tronçon de cette face (14) et lesdits tronçons de côté extérieur sont respectivement sensiblement tangents à trois cercles concentriques ayant leur centre commun situé à l'intérieur de la lèvre supérieure.

Dans WO-A-9627721, est certes connu un assemblage de panneaux où l'étanchéité et la résistance à l'arrachement de cet assemblage peuvent être augmentés en prévoyant une paire de reliefs sur la nervure de chaque panneau. Toutefois ce document spécifie qu'une paire de reliefs doit être prévue sur chacune des faces inférieure et supérieure de la nervure pour empêcher toute rotation d'un panneau par rapport à l'autre. L'enseignement de ce document n'est donc notamment pas compatible avec un encliquetage des panneaux par rotation et éloigne ainsi de la solution inventive.

Quant à EP-A-999321, qui est une publication intermédiaire, elle ne décrit pas la conformation susmentionnée de la face supérieure de la lèvre inférieure, en liaison avec lesdits cercles concentriques.

Le second moyen d'encliquetage crée entre les panneaux une zone de contact complémentaire qui améliore l'étanchéité contre les poussières et contre les liquides.

En outre, le second relief est décalé latéralement par rapport au premier relief dans un plan de section droite de l'assemblage entre les deux panneaux. Ainsi, les surfaces de contact correspondant respectivement aux deux reliefs et aux deux évidements ont des orientations différentes qui peuvent être choisies pour solliciter préférentiellement les deux panneaux l'un vers l'autre dans deux directions.

Inversement, la combinaison du premier et du second moyens d'encliquetage augmente notablement la résistance à l'arrachement.

Les caractéristiques des revendications 2 à 9 complètent l'invention.

Aux dessins annexés, donnés uniquement à titre d'exemples non limitatifs:
- la figure 1 est une coupe schématique en section droite d'un panneau selon un mode de réalisation de la présente invention ;
- la figure 2 est une vue semblable à la figure 1 représentant l'assemblage de deux panneaux adjacents selon le mode de réalisation de la figure 1 ;
- la figure 3 est une vue schématique agrandie semblable à la figure 2 illustrant les différentes phases d'assemblage de deux panneaux adjacents selon le mode de réalisation de la figure 1 ;
- les figures 4 et 5 sont des vues schématiques illustrant l'usinage par fraisage des conformations des parois de la rainure du mode de réalisation de la figure 1 ;
- les figures 6 et 7 sont des vues schématiques illustrant l'usinage par fraisage des parois de la nervure du mode de réalisation de la figure 1.

Dans le mode de réalisation représenté aux figures, le panneau 1 de recouvrement pour parquet, lambris ou analogue comporte, sur au moins deux de ses bords opposés 2, 3, sur un bord 2 une nervure longitudinale 4 et sur l'autre bord 3 une rainure longitudinale 5 s'étendant entre une lèvre supérieure 6 et une lèvre inférieure 7.

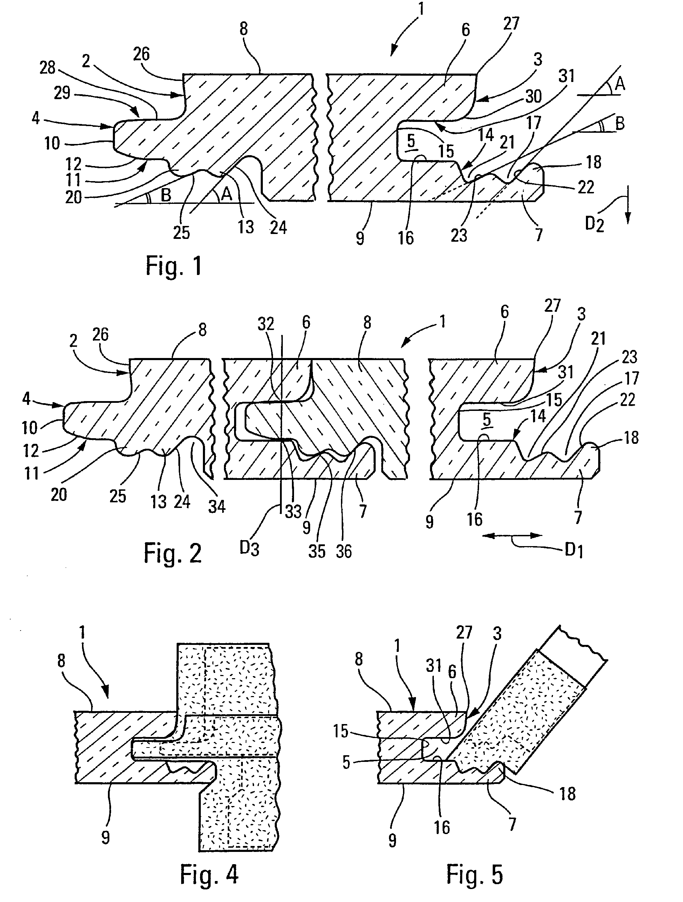

La nervure 4 et la rainure 5 sont ménagées dans l'épaisseur du panneau 1 et ont en section droite des conformations respectives, représentées à la figure 1, complémentaires l'une de l'autre, de telle sorte que la nervure 4 d'un panneau 1 est adaptée à être introduite dans la rainure 5 d'un panneau 1 adjacent par rotation d'un panneau par rapport à l'autre, comme schématisé à la figure 3.

De cette manière, les conformations de la nervure 4 viennent en prise avec les conformations de la rainure 5 pour s'opposer à un retrait d'un panneau 1 par rapport à l'autre dans une direction D1 perpendiculaire aux côtés 2, 3 et parallèle aux faces principales 8, 9 des panneaux 1 (voir figure 2).

Dans la description qui suit en référence aux figures, on suppose que les panneaux 1 sont disposés sensiblement horizontalement pour former un revêtement de sol du type parquet. On va donc parler de face supérieure, qui est en fait adaptée à constituer la face apparente, et de face inférieure, qui est en fait adaptée à constituer la face cachée, d'un panneau. Par similitude, on va parler de face supérieure et/ou de face inférieure de la nervure 4 ou de la lèvre supérieure 6 ou de la lèvre inférieure 7.

Ceci n'empêche en rien que les panneaux de recouvrement selon la présente invention puissent être disposés verticalement pour former un lambris, avec la face apparente tournée vers l'extérieur et l'autre face cachée, ou horizontalement pour former un plafond, avec la face apparente tournée vers le bas.

De façon connue, la lèvre inférieure 7 est plus longue que la lèvre supérieure 6 de sorte qu'une charge ponctuelle agissant au voisinage des bords contigus 3, 2 de deux panneaux 1 adjacents est transmise à un support (non représenté) sans risque de déformation ou de cassure de la lèvre supérieure 6 et/ou de la nervure 4.

La nervure 4 comporte, en section droite, à partir de son extrémité libre 10, et sur sa face inférieure 11, un premier tronçon 12 sensiblement circulaire suivi par un relief 13 en saillie vers le bas, lui-même suivi par un évidemment 34 (voir figure 2).

La lèvre inférieure 7 comporte sur sa face supérieure 14, en partant du fond 15 de la rainure 5, un premier tronçon 16 sur lequel vient rouler et glisser le premier tronçon 12 de la nervure 4, puis un évidement 17 complémentaire du relief 13 de la nervure 4, puis un bourrelet 18 qui délimite l'évidement 17 et qui est complémentaire de l'évidemment 34.

Comme schématisé à la figure 3, la lèvre inférieure 7 est adaptée à fléchir élastiquement vers l'extérieur, comme schématisé par la flèche 19, pour permettre le passage du relief 13 par dessus le bourrelet 18, et à reprendre ensuite sensiblement sa position au repos pour retenir la nervure 4 dans la rainure 5.

Suivant la présente invention, et comme représenté aux figures 1, 2 et 3 en section droite, la nervure 4 comporte sur sa face inférieure 11, et la lèvre inférieure 7 de la rainure 5 comporte sur sa face supérieure 14, respectivement un second relief 20 en saillie vers le bas dans le sens D2 et un second évidement 21 complémentaire conformés de manière telle que le second relief 20 de la nervure 4 d'un panneau 1 vient en prise avec le second évidement 21 de la rainure 5 d'un panneau adjacent lorsque l'on fait tourner un panneau 1 par rapport à l'autre afin de former un second moyen d'encliquetage de la nervure 4 dans la rainure 5.

On voit aux figures que le second relief 20 est situé entre le tronçon 12 et le premier relief 13 sur la face inférieure 11 de la nervure 4. La transition entre le tronçon 12 et le relief 20 se fait en un point d'inflexion 33 qui sera précisé plus loin, le plan tangent en ce point 33 à la face inférieure 11 de la nervure 4 étant parallèle aux faces principales 8, 9 du panneau 1.

On voit de même que le second évidement 21 de la face supérieure 14 de la lèvre inférieure 7 est situé entre le tronçon 16, qui est parallèle aux faces principales 8, 9 du panneau 1, et le premier évidement 17.

Le fond du second évidement 21 n'est pas plus proche de la face 9 que le fond du premier évidement 17, de manière à ne pas constituer une zone de moindre résistance à l'arrachement de la lèvre inférieure 7.

On voit, notamment à la figure 3, que la face supérieure 14 de la lèvre inférieure 7 est conformée de manière telle que le premier tronçon 16 de cette face 14 et les tronçons 22, 23 constituant respectivement les côtés extérieurs 22, 23 des deux évidements 17, 21 sont, au repos, respectivement sensiblement tangents en des points 33, 35, 36 à trois cercles concentriques C1, C2, C3 ayant leur centre M commun situé à l'intérieur de la lèvre supérieure 6.

De même, la face inférieure 11 de la nervure 4 est conformée de manière telle que le premier tronçon 12 et les tronçons 24, 25 constituant respectivement les côtés intérieurs 24, 25 des deux reliefs 13, 20 sont, au repos, respectivement sensiblement tangents à trois cercles concentriques C1, C2, C3 ayant leur centre commun M au-dessus de la nervure 4.

Dans les positions en cours d'assemblage et assemblée, représentées à la figure 3, de deux panneaux 1 adjacents, les trois cercles concentriques C1, C2, C3 de la rainure 5 d'un premier panneau 1 et de la rainure 4 de l'autre panneau 1 sont sensiblement confondus.

Dans chacune des positions représentées à la figure 3, la face latérale 26, située au-dessus de la nervure 4, du bord 2 du panneau 1 en cours de mise en place est pressée en butée contre le coin supérieur 27 du bord 3 du panneau 1 déjà en place, représenté à gauche de la figure.

On voit en outre sur cette figure 3 que le tronçon 28 sensiblement rectiligne et parallèle aux faces principales 8 et 9 du panneau 1, de la face supérieure 29 de la nervure 4 se déplace en restant tangent à un cercle C4 ayant le même centre M que les cercles concentriques C1, C2, C3. Le tronçon 30 de la face inférieure 31 de la lèvre supérieure 6 le long duquel glisse le tronçon 28 a dans ce but sensiblement la forme du tronçon correspondant du cercle C4.

Pour assurer entre la nervure 4 et la lèvre inférieure 7 un bon contact et une bonne étanchéité contre les poussières et les liquides, la face inférieure 11 de la nervure 4 comporte un premier tronçon circulaire 12 ayant un rayon supérieur au rayon du cercle concentrique C1 correspondant.

On voit aux figures 1 à 3 que les côtés extérieurs 22, 23 du premier et du second évidements 17, 21, et les côtés intérieurs 24, 25 du premier et du second reliefs 13, 20, sont sensiblement rectilignes et font respectivement des premiers angles A sensiblement égaux et des seconds angles B sensiblement égaux avec la face inférieure 9 du panneau 1 correspondant.

Ces angles A et B définissent les positions respectives des points de contact 35 et 36 sur les cercles C₃ et C₂.

Les premiers angles A ont avantageusement une mesure comprise entre 20° environ et 35° environ et par exemple voisine de 25° environ pour un panneau d'épaisseur 8 mm environ.

Les seconds angles B ont avantageusement une mesure comprise entre 40° environ et 55° environ, et par exemple voisine de 50° environ pour un panneau d'épaisseur 8mm environ.

La face inférieure 31 de la lèvre supérieure 6 et la face supérieure 14 de la lèvre inférieure 7 sont, aux points de contact respectifs 32, 33 avec les faces correspondantes 29, 11 de la nervure 4 dans la position assemblée, parallèles aux faces principales 8, 9 du panneau 1.

Le centre M des cercles concentriques C1, C2, C3, C4 se trouve ainsi sur la droite D₃ passant par les points 32, 33 et perpendiculaire aux faces principales 8, 9 du panneau 1.

Il résulte également de ce qui précède que le centre M des cercles concentriques C1 à C4 se trouve également sur la médiatrice D4 du segment D5 joignant les points 27 et 32, ce qui définit la position du point M dans la section droite de la lèvre supérieure 6.

Comme schématisé à la figure 4, le parallélisme entre les faces 31 et 14 délimitant la rainure 5 et les faces principales 8, 9 de chaque panneau 1 permet de réaliser la rainure 5 et le bord 3 en une unique opération de fraisage classique au moyen de la combinaison de deux fraises de profil. A cet effet, le bourrelet 18 a une hauteur au plus égale à celle de la lèvre inférieure 7 au niveau de la face supérieure 14 de celle-ci.

Par ailleurs, et comme schématisé à la figure 5, le profil des deux évidements 17, 21 et du bourrelet 18 peut être également obtenu par une unique opération de fraisage.

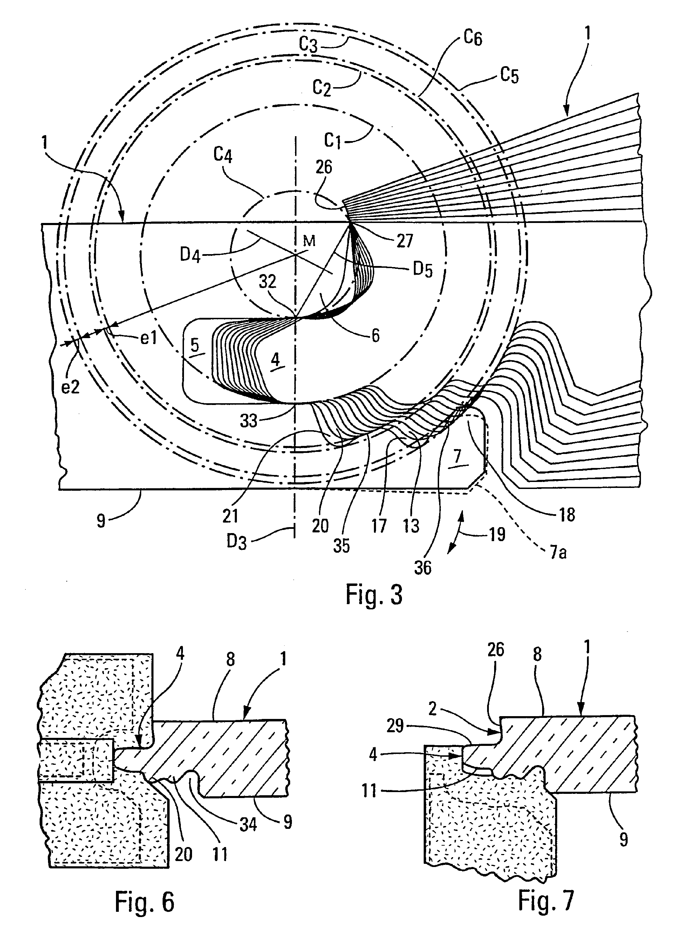

De même, et comme schématisé aux figures 6 et 7, le profil de la nervure 4 peut être réalisé en deux opérations de fraisage successives, une première opération effectuée au moyen de la combinaison de deux fraises de profil pour réaliser la face latérale 26 du bord 2 et l'extrémité de la nervure 4, avec sa face supérieure 29 et le tronçon circulaire 12 de sa face inférieure 11, la seconde opération pour réaliser les deux reliefs 13, 20 et l'évidement 34 adapté à recevoir le bourrelet 18.

On voit à la figure 3 que pendant la rotation du panneau 1 en cours de mise en place, représenté à la droite de la figure, les côtés intérieurs 24, 25 des reliefs 13, 20 appuient sur les côtés extérieurs 22, 23 des évidements 17, 21 pour faire fléchir, selon la flèche 19, jusqu'à la position 7a schématisée en tirets à la figure, la lèvre inférieure 7 qui reprend sensiblement sa position au repos après l'opération de mise en place, ce qui constitue sensiblement un double encliquetage du second panneau 1 par rapport au premier.

Dans ce fléchissement élastique de la lèvre inférieure 7 selon la flèche 19, le côté extérieur 22 du premier évidemment 17, plus proche de l'extrémité de la lèvre 7, fléchit d'une distance e₂ plus grande que la distance e₁ représentant le fléchissement du côté 23 du second évidement 21.

Dans ce mouvement de rotation, les côtés intérieurs 24, 25 des deux reliefs 13, 20 restent tangents à des cercles C₅, C₆ qui ont respectivement des rayons augmentés de e₂ et de e₁ par rapport aux rayons de C₃ et de C₂, avant de venir se loger contre les côtés 22, 23 dans la position assemblée des deux panneaux 1.

On a donc défini des moyens d'assemblage et d'encliquetage de deux panneaux adjacents présentant, par rapport à l'art antérieur connu, une plus grande résistance à l'arrachement et une meilleure étanchéité aux poussières et aux liquides aux points de contact 35, 36 qui sont aussi des points de serrage.

En ces points de serrage, les lèvres supérieure et inférieure d'un panneau exercent des forces de pression élastiques sur les conformations correspondantes de la nervure d'un panneau adjacent pour maintenir fortement les deux panneaux assemblés l'un contre l'autre.

Les points 32, 33 sont des points de contact dans lesquels il est prévu un léger jeu pour permettre une insertion facile de la nervure 4 dans la rainure 5 sans déformation notable de la lèvre inférieure 7 au point 33 pour que la déformation élastique de ladite lèvre inférieure 7 soit complètement réservée pour les fonctions d'encliquetage et de serrage aux points 35 et 36.

Ce résultat est atteint selon l'invention sans diminuer la résistance des panneaux à l'arrachement et sans limiter la facilité et la rapidité d'assemblage de deux panneaux adjacents.

Sans sortir du domaine de l'invention, on pourrait prévoir des conformations comportant trois reliefs et trois évidements.

On peut également modifier les angles et les longueurs en fonction de l'épaisseur, d'une part, et de la composition, et donc, de la résistance, d'autre part, de chaque panneau.

Ainsi, pour un panneau d'épaisseur 8mm, la demanderesse a obtenu de bons résultats avec une nervure 4 d'environ 4mm de longueur, une rainure 5 d'environ 5mm de profondeur et 2,5mm de hauteur, une lèvre inférieure d'environ 9mm de longueur.

Pour un panneau de plus grande épaisseur, on peut prévoir une lèvre inférieure plus longue, et donc des points de contact 35 et 36 plus éloignés de l'axe D3 correspondant à des angles A et B ayant des valeurs plus grandes que celles indiquées ci-dessus.

## Revendications

1. Panneau (1) de recouvrement pour parquet, lambris ou analogue, comportant une face supérieure (8) et une face inférieure (9) et, sur au moins deux bords opposés (2, 3), une nervure longitudinale (4) sur un bord (2) et, sur le bord opposé (3), une rainure longitudinale (5) qui s'étend entre une lèvre supérieure (6) et une lèvre inférieure (7), la nervure (4) et la rainure (5) étant ménagées dans l'épaisseur du panneau (1) et ayant en section droite des conformations respectives complémentaires l'une de l'autre de telle sorte que la nervure (4) d'un panneau (1) est adaptée à être introduite dans la rainure (5) d'un autre panneau (1) adjacent identique, par rotation d'un panneau (1) par rapport à l'autre de manière telle que les conformations de la nervure (4) viennent en prise avec les conformations de la rainure (5) pour s'opposer à un retrait d'un panneau (1) par rapport à l'autre dans une direction (D1) perpendiculaire aux dits bords (2, 3) et parallèle aux dites faces (8, 9) de chaque panneau (1), la nervure (4) comportant en section droite, à partir de son extrémité libre (10), et sur sa face inférieure (11), un premier tronçon (12) sensiblement circulaire suivi par un premier relief (13) en saillie vers le bas, et la lèvre inférieure (7) comportant, sur sa face supérieure (14) en partant du fond (15) de la rainure (5), un premier tronçon (16) sur lequel vient rouler et glisser le premier tronçon (12) de la nervure (4), plus loin un premier évidement (17) complémentaire dudit premier relief (13), et plus loin encore un bourrelet (18) délimitant ledit premier évidement (17), la lèvre inférieure (7) étant adaptée à fléchir élastiquement pour permettre le passage du premier relief (13) par dessus le bourrelet (18) et à reprendre ensuite sensiblement sa position au repos pour retenir la nervure (4) dans la rainure (5), **caractérisé en ce que** :
- en section droite, la nervure (4) comporte sur sa face inférieure (11) un second relief (20) en saillie vers le bas, et la lèvre inférieure (7) de la rainure (5) comporte sur sa face supérieure (14) un second évidement (21) complémentaire, de telle manière que le second relief (20) d'un panneau (1) vienne en prise avec le second évidement (21) de la rainure (5) d'un panneau (1) adjacent identique lorsque l'on fait tourner un panneau par rapport à l'autre, afin de former un second moyen d'encliquetage de la nervure (4) dans la rainure (5),
- et, lesdits premier et second évidements (17, 21) présentant chacun un tronçon (22, 23) constituant un côté extérieur de l'évidement, la face supérieure (14) de la lèvre inférieure (7) est conformée de manière telle que, au repos, le premier tronçon (16) de cette face (14) et lesdits tronçons de côté extérieur (22, 23) sont respectivement sensiblement tangents à trois cercles concentriques (C1, C2, C3) ayant leur centre (M) commun situé à l'intérieur de la lèvre supérieure (6).

2. Panneau de recouvrement selon la revendication 1, **caractérisé en ce que**, lesdits premier et second reliefs (13, 20) présentant chacun un tronçon (24, 25) constituant un côté intérieur du relief, la face inférieure (11) de la nervure (4) est conformée de façon telle que le premier tronçon (12) et lesdits tronçons (24, 25) de côté intérieur des reliefs (13, 20) sont respectivement sensiblement tangents aux dits trois cercles concentriques (C1, C2, C3), lesquels ont leur centre commun (M) au-dessus de la nervure (4).

3. Panneau de recouvrement selon la revendication 2, **caractérisé en ce que** dans des positions respectivement en cours d'assemblage et assemblée de deux dits panneaux (1) adjacents identiques, les trois cercles concentriques (C1, C2, C3) de la rainure (5) d'un premier panneau (1) et ceux de la nervure (4) de l'autre panneau (1) sont sensiblement confondus.

4. Panneau de recouvrement selon la revendication 2 ou 3, **caractérisé en ce que** la face inférieure (11) de la nervure (4) comporte un premier tronçon circulaire (12) ayant un rayon supérieur au rayon du cercle concentrique (C1) correspondant.

5. Panneau de recouvrement selon la revendication 2 ou 3, **caractérisé en ce que** le côté extérieur (22) du premier évidement (17) et le côté intérieur (24) du premier relief (13), d'une part, et le côté extérieur (23) du second évidement (21) et le côté intérieur (25) du second relief (20), d'autre part, sont sensiblement rectilignes et définissent respectivement, avec la face inférieure (9) du panneau (1) correspondant, des premiers angles (A) égaux et des seconds angles (B) égaux.

6. Panneau de recouvrement selon la revendication 5, **caractérisé en ce que** les premiers angles (A) ont une mesure comprise entre 20° et 30°.

7. Panneau de recouvrement selon la revendication 5 ou 6, **caractérisé en ce que** les seconds angles (B) ont une mesure comprise entre 45° et 55°.

8. Panneau de recouvrement selon la revendication 2 ou 3, **caractérisé en ce que** la face inférieure (31) de la lèvre supérieure (6) et la face supérieure (14) de la lèvre inférieure (7) sont, dans la position assemblée entre deux dits panneaux identiques adjacents et à l'endroit de points de contact respectif (32, 33) avec les faces correspondantes (29, 11) de la nervure (4), parallèles aux dites faces supérieure et inférieure (8, 9) de ces panneaux (1).

9. Assemblage de recouvrement, pour parquet, lambris ou analogue, comprenant plusieurs panneaux adjacents qui sont assemblés entre eux et sont chacun conformes à l'une quelconque des revendications 1 à 8.

## Claims

1. Cladding panel (1) for floors, walls or the like having a top face (8) and a bottom face (9) and, on at least two opposite edges (2,3), a longitudinal tongue (4) on one edge (2) and, on the opposite edge (3), a longitudinal groove (5) between a top lip (6) and a bottom lip (7), the tongue (4) and the groove (5) being formed within the thickness of the panel (1) and having respective shapes in cross section complementary to each other so that the tongue (4) of one panel (1) is adapted to be inserted into the groove (5) of another identical adjacent panel (1) by rotating one panel (1) relative to the other so that the shaped portions of the tongue (4) inter-engage with the shaped portions of the groove (5) to oppose withdrawal of one panel (1) relative to the other in a direction (D1) perpendicular to said edges (2,3) and parallel to said faces (8, 9) of each panel (1), the tongue (4) having in cross section, starting from its free end (10) and on its bottom face (11), a substantially circular first section (12) followed by a downwardly projecting first raised portion (13) and the bottom lip (7) having on its top face (14), starting from the back (15) of the groove (5), a first section (16) on which the first section (12) of the tongue (4) rolls and slides, followed further on by a first recess (17) complementary to said first raised portion (13), and followed further on again by a bead (18) delimiting said first recess (17), the bottom lip (7) being adapted to bend elastically to allow the first raised portion (13) to pass over the first bead (18) and then to resume substantially its unstressed position to retain the tongue (4) in the groove (5), **characterized in that**:
- in cross section, the tongue (4) has on its bottom face (11) a second raised portion (20) projecting downward and the bottom lip (7) of the groove (5) has on its top face (14) a complementary second recess (21), so that the second raised portion (20) of one panel (1) inter-engages with the second recess (21) of the groove (5) of an identical adjacent panel (1) when one panel is turned relative to the other, so as to form second means of clipping the tongue (4) into the groove (5),
- and, said first and second recesses (17,21) each having a section (22,23) constituting an exterior side of the recess, the top face (14) of the bottom lip (7) is shaped so that, when unstressed, the first section (16) of that face (14) and said exterior-side sections (22,23) are respectively substantially tangential to three concentric circles (C1,C2,C3) having their common centre (M) inside the top lip (6).

2. Cladding panel according to Claim 1, **characterized in that**, said first and second raised portions (13,20) each having a section (24,25) constituting an interior side of the raised portion, the bottom face (11) of the tongue (4) is shaped so that the first section (12) and said interior-side sections (24,25) of the raised portions (13,20) are respectively substantially tangential to said three concentric circles (C1,C2,C3) which have their common centre (M) above the tongue (4).

3. Cladding panel according to Claim 2, **characterized in that**, in positions of two said identical adjacent panels (1) during assembly and when assembled respectively, the three concentric circles (C1,C2,C3) of the groove (5) of a first panel (1) and those of the tongue (4) of the other panel (1) are substantially coincident.

4. Cladding panel according to Claim 2 or 3, **characterized in that** the bottom face (11) of the tongue (4) has a circular first section (12) having a radius greater than the radius of the corresponding concentric circle (C1).

5. Cladding panel according to Claim 2 or 3, **characterized in that** the exterior side (22) of the first recess (17) and the interior side (24) of the first raised portion (13), on the one hand, and the exterior side (23) of the second recess (21) and the interior side (25) of the second raised portion (20), on the other hand, are substantially rectilinear and define respective equal first angles (A) and equal second angles (B) to the bottom face (9) of the corresponding panel (1).

6. Cladding panel according to Claim 5, **characterized in that** the first angles (A) are in the range from 20° to 30°.

7. Cladding panel according to Claim 5 or 6, **characterized in that** the second angles (B) are in the range from 45° to 55°.

8. Cladding panel according to Claim 2 or 3, **characterized in that** the bottom face (31) of the top lip (6) and the top face (14) of the bottom lip (7) are, in the assembled position between two said identical adjacent panels and at the respective location of points of contact (32,33) with corresponding faces (29,11) of the tongue (4), parallel to said top and bottom faces (8,9) of these panels (1).

9. Floor, wall or like cladding assembly comprising a number of adjacent panels which are assembled together and are each in accordance with any one of Claims 1 to 8.

## Patentansprüche

1. Abdeckpaneel (1) filr Parkett, eine Wandverkleidung oder dergleichen, mit einer Oberseite (8) und einer Unterseite (9) sowie einer Längsrippe (4) an einem Rand (2) von wenigstens zwei sich gegenüberliegenden Rändern (2, 3) und einer Längsnut (5) an dem anderen Rand (3), die sich zwischen einer oberen Lippe (6) und einer unteren Lippe (7) erstreckt, wobei die Rippe (4) und die Nut (5) in der Dicke des Paneels (1) ausgebildet sind und im Querschnitt Formungen aufweisen, die jeweils komplementär zueinander sind, so dass die Rippe (4) eines Paneels (1) in die Nut (5) eines anderen benachbarten, identischen Paneels (1) durch Drehung eines Paneels (1) relativ zum anderen derart einbringbar eingefügt ist, dass die Formungen der Rippe (4) mit den Formungen der Nut (5) in Eingriff kommen, um ein Auseinanderschieben eines Paneels (1) relativ zum anderen in senkrechter Richtung (D1) zu den Kanten (2, 3) und parallel zu den Oberflächen (8, 9) der Paneele (1) zu verhindern, wobei die Rippe (4) im Querschnitt von ihrem freien Ende (10) aus und auf ihrer unteren Fläche (11) einen ersten Abschnitt (12) aufweist, der im wesentlichen kreisförmig ist und dem ein Vorsprung (13) nach unten folgt, und wobei die untere Lippe (7) auf ihrer oberen Fläche (14) vom Boden (15) der Nut (5) aus einen ersten Abschnitt (16), auf dem der erste Abschnitt (12) der Rippe (4) abrollt oder gleitet, sowie weiter entfernt eine erste, zum ersten Vorsprung (13) komplementäre Aussparung (17) und noch weiter entfernt einen Wulst (18) aufweist, der die erste Aussparung (17) begrenzt, wobei die untere Lippe (7) elastisch biegbar ist, um das Passieren des ersten Vorsprungs (13) über den Wulst (18) hinweg zuzulassen, und anschließend im wesentlichen ihre Ruhestellung einnehmen kann, um die Rippe (4) in der Nut (5) zu halten, **dadurch gekennzeichnet, dass**
- die Rippe (4) im Querschnitt an ihrer unteren Fläche (11) einen zweiten Vorsprung (20), der nach unten vorsteht, und die untere Lippe (7) der Nut (5) an ihrer oberen Fläche (14) eine zweite komplementäre Aussparung (21) aufweisen, so dass der zweite Vorsprung (20) eines Paneels (1) mit der zweiten Aussparung (21) der Nut (5) eines identischen, benachbarten Paneels (1) in Eingriff kommt, wenn ein Paneel (1) relativ zum anderen gedreht wird, um eine zweite Einrichtung zum Verriegeln der Rippe (4) in der Nut (5) zu schaffen
- und dass die erste und die zweite Aussparung (17, 21) jeweils einen Abschnitt (22, 23) aufweisen, der eine Außenseite der Aussparung bildet, wobei die obere Fläche (14) der unteren Lippe (7) derart geformt ist, dass in Ruhestellung der erste Abschnitt (16) dieser Fläche (14) und die Abschnitte der Außenseite (22, 23) im wesentlichen drei konzentrische Kreise (C1, C2, C3) berühren, die ihre gemeinsame Mitte im Inneren der oberen Lippe (6) aufweisen.

2. Abdeckpaneel nach Anspruch 1, **dadurch gekennzeichnet, dass** der erste und der zweite Vorsprung (13, 20) jeweils einen Abschnitt (24, 25) aufweisen, der eine Innenseite des Vorsprungs bildet, und die untere Fläche (11) der Rippe (4) so ausgebildet ist, dass der erste Abschnitt (12) und die Abschnitte (24, 25) der Innenseite der Vorsprünge (13, 20) im wesentlichen drei konzentrische Kreise (C1, C2, C3) berühren, die ihre gemeinsame Mitte (M) über der Rippe (4) haben.

3. Abdeckpaneel nach Anspruch 2, **dadurch gekennzeichnet, dass** in Positionen jeweils beim Montieren und nach dem Montieren zweier angrenzender, identischer Paneele (1) die drei konzentrischen Kreise (C1, C2, C3) der Nut (5) eines ersten Paneels (1) und die der Rippe (4) des anderen Paneels im wesentlichen in Übereinstimmung sind.

4. Abdeckpaneel nach Anspruch 2 oder 3, **dadurch gekennzeichnet, dass** die untere Fläche (11) der Rippe (4) einen ersten kreisrunden Abschnitt (12) umfasst, der einen größeren Radius als der des entsprechenden konzentrischen Kreises (C1) hat.

5. Abdeckpaneel nach Anspruch 2 oder 3, **dadurch gekennzeichnet, dass** die Au-ßenseite (22) der ersten Aussparung (17) und die Innenseite (24) des ersten Vorsprungs (13) einerseits und die Außenseite (23) der zweiten Aussparung (21) und die Innenseite (25) des zweiten Vorsprungs (22) andererseits im wesentlichen geradlinig sind und jeweils mit der Innenseite (9) des Paneels (1) entsprechend erste gleiche Winkel (A) und zweite gleiche Winkel (B) definieren.

6. Abdeckpaneel nach Anspruch 5, **dadurch gekennzeichnet, dass** die ersten Winkel (A) einen Wert von ungefähr 20° bis 30° haben.

7. Abdeckpaneel nach Anspruch 5 oder 6, **dadurch gekennzeichnet, dass** die zweiten Winkel (B) einen Wert von ungefähr 45° bis 55° haben.

8. Abdeckpaneel nach Anspruch 2 oder 3, **dadurch gekennzeichnet, dass** die untere Fläche (31) der oberen Lippe (6) und die obere Fläche (14) der unteren Lippe (7) an den Montagepositionen zwischen zwei benachbarten, identischen Paneelen und an entsprechenden Kontaktpunkten (32, 33) mit den entsprechenden Oberflächen (29, 11) der Rippe (4), in montierter Position, parallel zu der Oberseite und Unterseite (8, 9) dieser Paneele (1) sind.

9. Abdeckkonstruktion als Parkett, Verkleidung oder Ähnliches, die mehrere benachbarte Paneele aufweist, die zusammengefügt sind und nach einem der Ansprüche 1 bis 8 ausgebildet sind.
